# EUROPEAN PATENT APPLICATION

(11) **EP 4 667 273 A1**
(43) Date of publication of application: **24.12.2025**
(21) Application number: 24806855.3
(22) Date of filing: 21.03.2024
(51) Int. Cl.: B60L 3/00

(54) **CHARGING PLAN DISPLAY SYSTEM AND PROGRAM**

(30) Priority: 16.05.2023 JP 2023080986
(71) Applicant: AISIN CORPORATION, Kariya-shi, Aichi 448-8650 (JP)
(72) Inventor: SAHASHI, Tatsuya, Kariya-shi, Aichi 448-8650 (JP); SUGIURA, Yukio, Kariya-shi, Aichi 448-8650 (JP); SUYAMA, Daiki, Kariya-shi, Aichi 448-8650 (JP)
(74) Representative: Kramer Barske Schmidtchen Patentanwälte PartG mbB
(86) International application number: PCT/JP2024/011112
(87) International publication number: WO 2024/236900

(57) **Abstract**

[Object] To provide a system capable of presenting a plan regarding factors that affect the remaining charge of a battery.

[Solution] The system includes: an acquisition unit configured to acquire a driving preference indicating a driving preference of a user; a determination unit configured to determine, in accordance with the driving preference, whether to adjust the temperature of a battery configured to supply electric power to a motor that serves as a drive power source for a vehicle, an upper limit of the amount of charge to be supplied to the battery for charging, a speed limit of the vehicle, or a charging facility; and a display control unit configured to display, on a display unit, a charging plan set based on the determined whether to adjust the temperature of the battery, the upper limit of the amount of charge, the speed limit, or the charging facility.

## Description

### TECHNICAL FIELD

The present invention relates to charging plan display systems and programs.

### BACKGROUND ART

Patent Document 1 discloses a control device for an electric vehicle that improves electric power efficiency and cruising range in an eco mode (EV-priority mode). In the control device described in Patent Document 1, when the eco mode is selected by the user, the distribution ratio of regenerative braking force between a front motor and a rear motor is changed as compared to a normal mode different from the eco mode such that the maximum amount of regenerative electric energy is obtained from the front and rear motors.

### Related Art Documents

### Patent Documents

Patent Document 1: Japanese Unexamined Patent Application Publication No. 2022-175229 (JP 2022-175229 A)

### SUMMARY OF THE INVENTION

### Problem to be Solved by the Invention

The user may select a driving mode in accordance with the user's own driving preference from among a plurality of driving modes including the eco mode, as in the device described in Patent Document 1. On the other hand, it is difficult for the user to determine by himself or herself how to adjust factors that affect the remaining charge of the battery, in accordance with the driving preference.

The present invention has been made in view of the above issues, and an object thereof is to provide a system capable of presenting a plan regarding factors that affect the remaining charge of a battery.

### Means for Solving the Problem

In order to achieve the above object, a charging plan display system of the present invention includes: an acquisition unit configured to acquire a driving preference indicating a driving preference of a user; a determination unit configured to determine, in accordance with the driving preference, whether to adjust the temperature of a battery configured to supply electric power to a motor that serves as a drive power source for a vehicle, an upper limit of an amount of charge to be supplied to the battery for charging, a speed limit of the vehicle, or a charging facility; and a display control unit configured to display, on a display unit, a charging plan set based on the determined whether to adjust the temperature of the battery, the upper limit of the amount of charge, the speed limit, or the charging facility.

A program of the present invention is a program that causes a computer to function as: an acquisition unit configured to acquire a driving preference indicating a driving preference of a user; a determination unit configured to determine, in accordance with the driving preference, whether to adjust the temperature of a battery configured to supply electric power to a motor that serves as a drive power source for a vehicle, an upper limit of an amount of charge to be supplied to the battery for charging, a speed limit of the vehicle, or a charging facility; or a display control unit configured to display, on a display unit, a charging plan set based on the determined whether to adjust the temperature of the battery, the upper limit of the amount of charge, the speed limit, or the charging facility.

As described above, in the charging plan display system and the program, whether to adjust the temperature of the battery, the upper limit of the amount of charge to be supplied to the battery for charging, the speed limit of the vehicle, or the charging facility is determined in accordance with the user's driving preference, and a charging plan set based on these determined items is displayed on the display unit. Factors that affect the remaining charge of the battery (e.g., the upper limit of the amount of charge to be supplied to the battery for charging and the like) are displayed on the display device. This allows the user to avoid having to make a plan by himself or herself on how to adjust factors that affect the remaining charge of the battery.

### BRIEF DESCRIPTION OF THE DRAWINGS

[FIG. 1] FIG. 1 is a block diagram showing an example of a charging plan display system.
[FIG. 2] FIG. 2 is a diagram showing an example of charging facility information.
[FIG. 3] FIG. 3 is a flowchart showing an example of a charging plan display process.
[FIG. 4] FIG. 4 is a diagram showing a display example of a display unit.
[FIG. 5] FIG. 5 is a diagram illustrating the arrival time, electric energy consumption, and the like when traveling to a destination under various conditions of the speed limit, whether the battery temperature is to be adjusted, and the charging upper limit.
[FIG. 6] FIG. 6 is a diagram illustrating the arrival time and electric energy consumption based on FIG. 5.

### MODES FOR CARRYING OUT THE INVENTION

Embodiments of the present invention will be described in the following order.
(1) Configuration of Charging Plan Display System:
(2) Charging Plan Display Process:
(3) Other Embodiments:

### (1) Configuration of Charging Plan Display System:

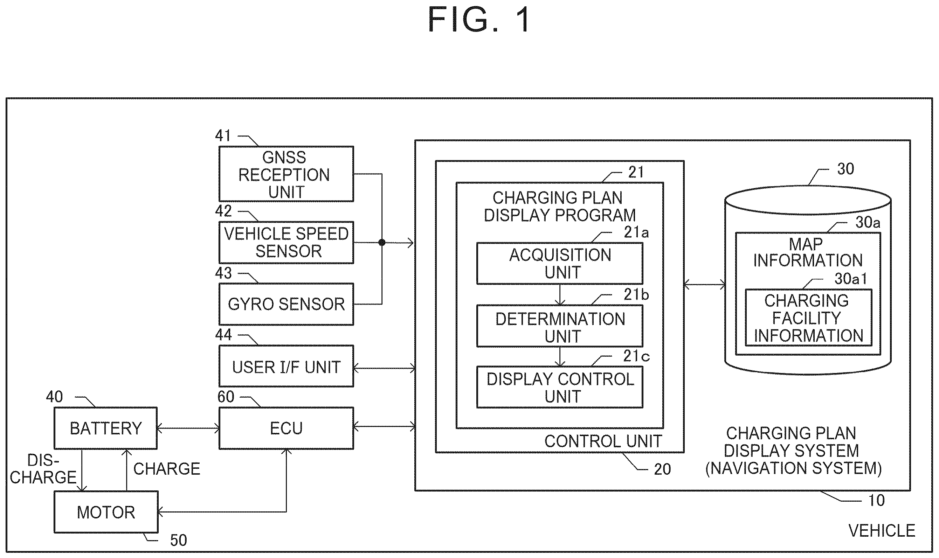

FIG. 1 is a block diagram showing the configuration of a charging plan display system 10 mounted on a vehicle. The charging plan display system 10 is a system that displays, on a display unit of a user I/F unit 44, a charging plan for a battery that supplies electric power to a motor serving as a drive power source for the vehicle, in accordance with a driving preference indicating the user's preference in traveling. In the present embodiment, the charging plan display system 10 is mounted on the vehicle and is implemented by a navigation system. The vehicle according to the present embodiment is a battery electric vehicle (BEV: Battery Electric Vehicle) that is equipped with a battery 40, namely a rechargeable storage battery, and that is driven as electric power stored in the battery 40 is supplied to a motor (traction motor) 50. Note that the battery electric vehicle may be a so-called range extender EV that includes an engine dedicated to power generation. The vehicle may also be a so-called autonomous vehicle that travels by performing acceleration, deceleration, and steering without human driving operations. The vehicle may be equipped with either a single traction motor or a plurality of traction motors.

The charging plan display system 10 includes a control unit 20 including a CPU, a RAM, a ROM, and the like, and a recording medium 30. The control unit 20 is capable of executing a charging plan display program 21 stored in the ROM or the like.

Map information 30a is recorded in the recording medium 30. The map information 30a indicates information on roads and the like that is referred to, for example, to perform route guidance and the like. In the present embodiment, the map information 30a includes node data, link data, shape interpolation point data, and facility data. The node data is data indicating the positions of intersections. The link data indicates road sections and is associated with nodes corresponding to endpoints of the road sections. That is, the link data indicates links connecting the nodes. In the present embodiment, the link data includes information indicating road attributes of the road sections indicated by the link data, and information on a lower speed limit range (e.g., from 50 km/h to 80 km/h in the case of an expressway) is associated with each road attribute. The road attributes include, for example, information indicating expressways, ordinary roads, narrow roads, and the like. The link data is also associated with the shape interpolation point data indicating the positions of shape interpolation points for specifying the shapes of the roads between the nodes.

The facility data indicates names, positions, and attributes of facilities located around roads and the like. The facilities in the present embodiment include various types of facilities. For example, names, positions, and attributes of rest areas such as service areas, stores, trademark facilities, public facilities, and the like are defined as the facility data. The facility data in the present embodiment further includes charging facility information 30a1 on charging facilities. The charging facilities are facilities for charging the battery 40 installed in the vehicle.

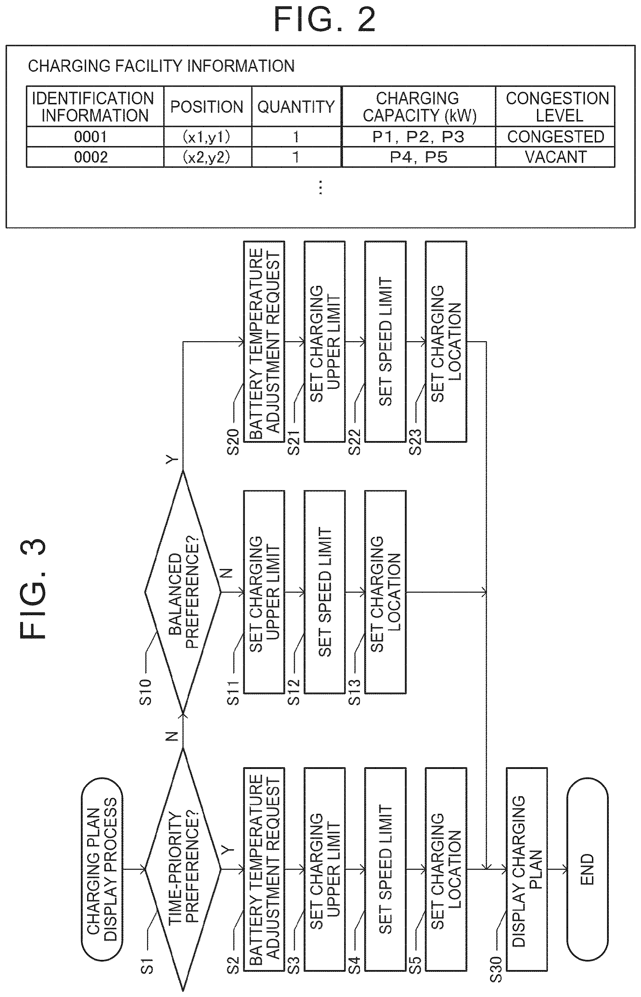

FIG. 2 shows an example of the charging facility information 30a1. The charging facility information 30a1 includes identification information, positions, quantities, charging capacities (kW), and congestion levels of the charging facilities. The identification information is information for distinguishing the charging facilities, and a position, a quantity, and a charging capacity are defined for each piece of identification information. The position is the coordinates of a charging facility and is defined using a coordinate system for specifying the positions of facilities in the map information 30a (e.g., a latitude and longitude coordinate system). The quantity indicates the number of chargers installed in the same charging facility. In the example shown in FIG. 2, the quantity is "1" for all of the charging facilities.

The charging capacity indicates electric power that can be output by a charging facility. In the example shown in FIG. 2, each charging facility is capable of outputting electric power in a plurality of patterns having different power values. For the charging facility corresponding to the identification information "0001," the charging capacity is indicated by "P1, P2, P3." Although, in the example shown in FIG. 2, the charging capacities are represented by symbols such as P1, P2, ... , the actual values indicated by the symbols are, for example, values such as 150 kW and 80 kW. The charging capacity P1, P2, or P3 may be selected by the control unit 20 of the vehicle based on, for example, the state of the vehicle (the battery temperature, the battery's remaining charge), or may be selected by the user. The charging capacity need only indicate the amount of energy that can be supplied for charging from a charging facility, and may alternatively be defined in various other ways such as by the magnitude of current or voltage that can be supplied during charging.

The congestion level indicates how congested a charging facility is. In the example shown in FIG. 2, the congestion level is defined based on past statistical values. The congestion level is defined, for example, for each day of the week or each time slot of the day, as "congested," "somewhat congested," "vacant," or the like. An average waiting time is defined for each of these congestion level indicators. For example, a waiting time of 30 minutes is defined for "congested," 15 minutes for "somewhat congested," and 0 minutes for "vacant." The congestion level may alternatively be defined based on real-time congestion levels instead of statistical values. In this case, the control unit 20 communicates with, for example, an external server that obtains real-time congestion levels, and acquires the congestion levels therefrom.

The vehicle of the present embodiment includes a GNSS reception unit 41, a vehicle speed sensor 42, a gyro sensor 43, the user I/F unit 44, the battery 40, the motor 50, and an ECU 60 that controls the vehicle.

The GNSS reception unit 41 is a device that receives signals from a Global Navigation Satellite System. The GNSS reception unit 41 receives radio waves from navigation satellites and outputs, via an interface, not shown, signals for calculating the position of the vehicle. The control unit 20 acquires these signals and obtains the position of the vehicle. The vehicle speed sensor 42 outputs a signal corresponding to the rotational speed of the wheels of the vehicle. The control unit 20 acquires this signal via an interface, not shown, and obtains the vehicle speed.

The gyro sensor 43 detects angular acceleration associated with turning of the vehicle in a horizontal plane, and outputs a signal corresponding to the orientation of the vehicle. The control unit 20 acquires this signal and obtains the direction of travel of the vehicle. The vehicle speed sensor 42, the gyro sensor 43, and the like are used to identify the travel trajectory of the vehicle. In the present embodiment, the control unit 20 identifies the position of the vehicle based on a departure point and a travel trajectory, and corrects the vehicle's current position identified based on the departure point and the travel trajectory, using the output signals from the GNSS reception unit 41. The control unit 20 performs a map matching process based on the trajectory of the position of the vehicle and the map information 30a, and identifies the position of the vehicle on a road.

The user I/F unit 44 is an interface unit for receiving instructions from the user and providing various types of information to the user, and includes a display unit including a touch panel display, not shown, an input unit such as a switch, and an output unit such as a speaker. In the present embodiment, a charging plan for the battery 40 in accordance with the user's driving preference, which will be described later, is displayed on the display unit of the user I/F unit 44.

The battery 40 is, for example, a secondary battery such as a lithium-ion battery or a nickel metal hydride battery, or a high-voltage energy storage device including a capacitor or the like. The battery 40 is electrically connected to the motor 50 that serves as a drive power source, and the vehicle is driven as electric power is supplied from the battery 40 to the motor 50. The battery 40 is provided with sensors, not shown. The sensors output information indicating the temperature and remaining charge of the battery. Based on the output of the sensors, the control unit 20 periodically acquires the temperature and remaining charge of the battery 40 via the ECU 60.

The motor 50 is, for example, a permanent magnet synchronous motor or an induction motor, and is connected to drive wheels, not shown, of the vehicle so as to be capable of transmitting power thereto. The motor 50 functions as an electric motor that outputs torque when driven by receiving at least electric power. The motor 50 also functions as a generator that generates electric power when driven by receiving torque from the outside. That is, the motor 50 is a so-called motor-generator that functions both as an electric motor and as a generator. The motor 50 is electrically connected to the battery 40 as described above. Accordingly, electric power stored in the battery 40 can be supplied to the motor 50, allowing the motor 50 to function as an electric motor and output drive torque. In addition, torque transmitted from the drive wheels can cause the motor 50 to function as a generator, and regenerative electric energy generated at that time can be stored in the battery 40. The output rotational speed and output torque of the motor 50 are electrically controlled by the ECU 60.

The ECU 60 is an electronic control unit configured mainly with a microcomputer, and in the example shown in FIG. 1, it primarily controls the battery 40. Specifically, the ECU 60 is capable of outputting a control signal to the battery 40, and by outputting the control signal to the battery 40, controls the temperature of the battery 40. For example, the ECU 60 controls the temperature of the battery 40 within a predetermined temperature range (e.g., from 20°C to 30°C) in which the charging efficiency of the battery 40 is high. When the current temperature of the battery 40 is higher than the predetermined temperature range, the ECU 60 lowers the temperature of the battery 40 through cooling control. The cooling control may have various configurations. For example, a configuration is conceivable in which a refrigerant flow path formed to allow heat exchange with the battery 40 is provided around the battery 40 and a refrigerant flowing through the refrigerant flow path is cooled by a heat exchanger. The cooling medium flow path and the heat exchanger may be shared with other cooling systems. For example, they may be at least partially shared with a cooling system for air conditioning or a cooling system for a motor that drives the vehicle. Alternatively, cooling may be performed by an air-cooling system that uses outside air or by circulating coolant. When the current temperature of the battery 40 is lower than the predetermined temperature range, the ECU 60 raises the temperature of the battery 40 by a heater, not shown.

The control unit 20 is capable of executing a program stored in the recording medium 30 or the ROM. In the present embodiment, the charging plan display program 21 can be executed as this program. Conventionally, as described in Patent Document 1, it is possible to select a driving mode in accordance with the user's driving preference from among a plurality of driving modes including an eco mode. On the other hand, it is difficult for the user to determine by himself or herself how to adjust factors that affect the remaining charge of the battery, in accordance with the driving preference. Therefore, in the present embodiment, the control unit 20 displays a charging plan for the battery 40 in accordance with the user's driving preference. As used herein, the charging plan refers to a plan regarding charging of the battery 40 suitable for the user's driving preference. For example, the plan includes information such as a charging upper limit, a charging location (charging facility), a speed limit, and whether the battery temperature is to be adjusted. The control unit 20 displays, on the display unit, these pieces of information in accordance with the driving preference selected by the user. The charging plan display program 21 is a program for performing this display.

As described above, since the charging plan display system 10 is implemented by a navigation system, the control unit 20 is capable of executing a navigation program, not shown, stored in the ROM or the like. This navigation program is a program that causes the control unit 20 to implement a function to display, on the display unit of the user I/F unit 44, a map including the current position of the vehicle and guiding the driver or occupant to a destination. The control unit 20 is also capable of executing a program for maximizing the amount of regenerative electric energy of the motor, like the control device described in Patent Document 1. Since the program for maximizing the amount of regenerative electric energy is a well-known technique as disclosed in Patent Document 1 and the like, a detailed description thereof will be omitted here.

When the charging plan display program 21 described above is executed, the control unit 20 functions as an acquisition unit 21a, a determination unit 21b, and a display control unit 21c. In the following description, the processes that are described below as being performed by the acquisition unit 21a, the determination unit 21b, and the display control unit 21c are processes implemented by the control unit 20.

The acquisition unit 21a is a function to acquire a driving preference indicating the user's driving preference. Specifically, the control unit 20 uses the function of the acquisition unit 21a to acquire the driving preference by receiving a selection of the driving preference based on an operation of the user I/F unit 44. The driving preference refers to the way in which the user prefers the vehicle to be driven when traveling to a destination. In the present embodiment, the driving preferences include: a time-priority preference that prioritizes early arrival at the destination; an energy-saving preference that prioritizes reducing the consumption of the battery 40 during travel to the destination; and a balanced preference that prioritizes balancing both the time to reach the destination and the consumption of the battery 40 during travel to the destination. That is, the control unit 20 uses the function of the acquisition unit 21a to acquire the user's driving preference by receiving a selection of one of the time-priority preference, the energy-saving preference, and the balanced preference.

The determination unit 21b is a function to determine, in accordance with the user's driving preference, whether to adjust the temperature of the battery 40, a charging upper limit indicating the upper limit of the amount of charge to be supplied when charging the battery 40, and a speed limit of the vehicle. Whether to adjust the temperature of the battery 40 refers to whether it is necessary to adjust (i.e., control) the temperature of the battery 40 within a predetermined temperature range (e.g., from 20°C to 30°C) that ensures high output and charging efficiency of the battery 40. Whether to adjust the temperature of the battery 40 may vary depending on the user's driving preference. In the present embodiment, for example, when the user's driving preference is the time-priority preference or the balanced preference, the control unit 20 adjusts the temperature of the battery 40. This is because, in the case of the time-priority preference or the balanced preference, it is desirable to at least reduce the time required to reach the destination, and it is necessary to control the temperature of the battery 40 within a temperature range that ensures high output and charging efficiency of the battery 40. On the other hand, when the user's driving preference is, for example, the energy-saving preference, the control unit 20 does not adjust the temperature of the battery 40. This is because adjusting the temperature of the battery 40 consumes electric energy.

The charging upper limit indicating the upper limit of the amount of charge to be supplied when charging the battery 40, and the speed limit of the vehicle may also vary according to the user's driving preference. For example, when the user's driving preference is the time-priority preference, the control unit 20 sets the charging upper limit to the maximum amount of charge that can be supplied with the highest charging efficiency, and sets the speed limit to the legal speed limit in order to prioritize time. On the other hand, when the user's driving preference is the energy-saving preference, the control unit 20 sets the charging upper limit to a predetermined upper limit charge amount that prevents battery degradation (e.g., a remaining charge level of 80% to 90%), and sets the speed limit to a predetermined speed that is lower than the legal speed limit. This is because charging the battery 40 up to the upper limit charge amount can reduce the number of charging sessions before arrival at the destination, thereby reducing battery degradation resulting from an increased number of charging sessions and achieving energy savings (eco-friendliness). This is also because setting the speed limit to the predetermined speed lower than the legal speed limit results in the vehicle traveling at a speed that is at least lower than the legal speed limit, thereby reducing the amount of power consumption of the battery 40 and achieving energy savings. When the user's driving preference is the balanced preference, the control unit 20 sets the charging upper limit to an amount that is greater than or equal to the maximum amount of charge that can be supplied with the highest charging efficiency described above and less than the upper limit charge amount, and sets the speed limit to a speed that is higher than or equal to the predetermined speed described above and less than the legal speed limit. This is to strike a balance between the time-priority preference and the energy-saving preference. A specific aspect of the processing performed by the function of the determination unit 21b will be described later with reference to a flowchart.

The display control unit 21c is a function to display, on the display unit, a charging plan set based on whether the temperature of the battery 40 is to be adjusted, the charging upper limit of the amount of charge to be supplied to the battery 40 for charging, and the speed limit of the vehicle, as determined by the function of the determination unit 21b. In the present embodiment, the control unit 20 uses the function of the display control unit 21c to display, on the display unit of the user I/F unit 44, information including a charging upper limit of the amount of charge, a speed limit, and a charging facility in accordance with the driving preference selected by the user. A specific aspect will be described later with reference to the flowchart.

According to this configuration, factors that affect the remaining charge of the battery (e.g., the charging upper limit of the battery and the like) are displayed. This allows the user to avoid having to make a plan by himself or herself on how to adjust factors that affect the remaining charge of the battery. When the user follows the displayed plan, driving in accordance with the driving preference becomes possible.

### (2) Charging Plan Display Process:

Next, a charging plan display process that is performed by the control unit 20 will be described. FIG. 3 is a flowchart showing an example of the charging plan display process. For example, when a destination is set by the user (the driver or a passenger), the control unit 20 performs the charging plan display process, and causes the display unit to display a charging plan for traveling to the set destination. In the example shown in FIG. 3, it is assumed that travel is made from a departure point to a destination using an expressway, and that the battery 40 needs to be charged multiple times at charging facilities located at service areas or the like during the travel.

When the charging plan display process is started, the control unit 20 first determines, by using the function of the acquisition unit 21a, whether the user's driving preference is the time-priority preference (step S1). As described above, the user's driving preference refers to the way in which the user prefers the vehicle to be driven when traveling to a destination, and includes the time-priority preference, the energy-saving preference, and the balanced preference. The control unit 20 displays, on the display unit, a selection screen for the time-priority preference, the energy-saving preference, and the balanced preference, causes the user to select one of the driving preferences, and acquires the user's driving preference based on the result of the selection. When it is determined in step S1 that the driving preference selected by the user is the time-priority preference, the control unit 20 proceeds to step S2. On the other hand, when the driving preference selected by the user is other than the time-priority preference, the control unit 20 proceeds to step S10. In this example, a case where the driving preference selected by the user is the time-priority preference will be described, and a case where the driving preference selected by the user is other than the time-priority preference will be described later.

In step S2, the control unit 20 makes a battery temperature control request to adjust the temperature of the battery 40, by using the function of the determination unit 21b (step S2). Specifically, the control unit 20 communicates with the ECU 60 of the vehicle and makes a request to control the temperature of the battery 40 within a predetermined temperature range. The predetermined temperature range is a temperature range of the battery 40 in which the performance of the output and charging efficiency of the battery 40 is considered to be high, and is, for example, from 20°C to 30°C. Upon receiving the battery temperature adjustment request from the control unit 20, the ECU 60 acquires the current temperature of the battery 40 from a sensor that outputs temperature information of the battery 40. When the acquired temperature of the battery 40 is equal to a threshold (e.g., 40°C or higher), the ECU 60 performs cooling control to lower the temperature of the battery 40. The cooling control is performed by, for example, heat exchange using a refrigerant for air-conditioning as described above. On the other hand, when the acquired temperature of the battery 40 is equal to a threshold (e.g., 10°C or less), the ECU 60 performs control to raise the temperature of the battery 40 to within a predetermined temperature range. The control to raise the temperature is performed by, for example, using a heater (not shown) as described above. Upon receiving the battery temperature adjustment request, the ECU 60 controls the temperature of the battery 40 within a predetermined temperature range until arrival at the destination (or while the current driving preference is selected). After the control unit 20 makes the battery temperature adjustment request to the ECU 60 in this manner, the control unit 20 proceeds to step S3.

In step S3, the control unit 20 sets a charging upper limit that indicates the upper limit of the amount of charge to be supplied to the battery for charging during travel to the destination, by using the function of the determination unit 21b (step S3). In this example, since the time-priority preference has been selected in step S1, the charging upper limit for the time-priority preference is set. The charging upper limit for the time-priority preference is preferably set to the maximum amount of charge that can be supplied with the highest charging efficiency. In general, when the remaining charge of the battery becomes high (e.g., 50% or more), the battery may degrade due to a temperature rise associated with charging, which may result in a decrease in charging efficiency. In addition, as the remaining charge increases, the amount of electric power that the battery can accept may become limited, which can also lead to reduced charging efficiency. Therefore, the control unit 20 sets the charging upper limit to the maximum amount of charge that can be supplied with the highest charging efficiency (50% in the example shown in FIG. 3). The highest charging efficiency is the maximum charging efficiency that does not cause battery degradation due to a battery temperature rise associated with charging.

The control unit 20 then sets a speed limit of the vehicle for traveling to the destination, by using the function of the determination unit 21b (step S4). In this example, since the time-priority preference has been selected in step S1, priority is given to reducing the time required to reach the destination, and the speed limit is set to the highest speed at which the vehicle is allowed to travel. That is, the control unit 20 sets the speed limit to the legal speed limit. For example, the control unit 20 refers to the map information 30a, and when the type of road to the destination is an expressway with a legal speed limit of 100 km/h, sets the speed limit to 100 km/h.

Subsequently, the control unit 20 refers to the charging facility information 30a1 and determines charging locations (i.e., charging facilities) for the battery 40 during travel to the destination, by using the function of the determination unit 21b (step S5). Specifically, the control unit 20 refers to the map information 30a to perform route search from the current position to the set destination, and extracts charging facilities located along the obtained route. The route search may be performed using various algorithms. For example, Dijkstra's algorithm, A* algorithm, or improved versions thereof may be adopted. In addition, the control unit 20 refers to the map information 30a and the charging facility information 30a1, calculates a cruising range, namely a maximum distance the vehicle can travel based on the remaining charge of the battery 40, based on the product of the vehicle's average electric power efficiency and the remaining charge of the battery 40, and extracts charging facilities located within the cruising range. In the present embodiment, as described above, the battery 40 needs to be charged multiple times during travel to the destination. Therefore, a plurality of charging facilities is extracted. The average electric power efficiency is recorded for each road type based on the past driving history of the vehicle. The remaining charge of the battery 40 is, for example, 100% at the departure point, and when the battery is charged at a charging facility, it reaches the charging upper limit of 50% as described in step S3. The cruising range may be multiplied by a predetermined coefficient less than 1 (e.g., 0.8) as a safety factor. Since the congestion levels of the charging facilities are defined in the charging facility information 30a1 as described above, facilities with low congestion levels may be extracted. Since the driving preference is the time-priority preference, congestion at charging facilities results in longer waiting times for charging the battery 40. After setting the charging locations, the control unit 20 proceeds to step S30.

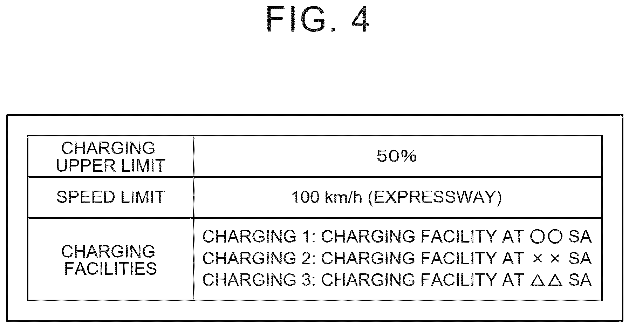

In step S30, the control unit 20 displays the charging plan on the display unit by using the function of the display control unit 21c. That is, the control unit 20 causes the display unit to display the charging upper limit of the battery 40, the speed limit of the vehicle, and the information on the charging locations in accordance with the time-priority preference selected by the user. For example, as shown in FIG. 4, various types of information are displayed in text format. In the example shown in FIG. 4, it is indicated that the charging upper limit is 50%, the speed limit on the expressway is 100 km/h, and there are three charging facilities (e.g., a charging facility at ∘∘ SA (service area) and the like). This allows the user to grasp the charging upper limit, the vehicle speed limit, and the charging locations for driving with the time-priority preference. Although not shown herein, a map may be displayed on the display unit, and the route to the destination and charging facilities along the route may be displayed on the map. Information such as the time required to reach the destination and the fact that the battery temperature is to be adjusted may also be displayed.

Next, a description is given of the processing to be performed when it is determined in step S1 described above that the time-priority preference was not selected by the user (N in step S1). In the following, a description of the processing that is the same as that described above for the case where the time-priority preference has been selected will be omitted or simplified.

In step S10, the control unit 20 determines whether the driving preference selected through the operation of the user I/F unit 44 is the balanced preference, by using the function of the acquisition unit 21a. Since it has been determined in step S1 described above that the time-priority preference was not selected, the driving preference that may have been selected is the balanced preference or the energy-saving preference. When it is determined that the selected driving preference is not the balanced preference (in other words, that the energy-saving preference has been selected), the control unit 20 proceeds to step S11. On the other hand, when it is determined that the selected driving preference is the balanced preference, the control unit 20 proceeds to step S20. In this example, the case where the energy-saving preference has been selected (that is, the balance preference has not been selected) will be described first, and the processing for the case where the balanced preference has been selected will be described later.

In step S11, the control unit 20 sets a charging upper limit that indicates the upper limit of the amount of charge to be supplied to the battery for charging during travel to the destination, by using the function of the determination unit 21b (step S11). In this example, since the energy-saving preference has been selected in step S10, the control unit 20 sets the charging upper limit for the energy-saving preference. The upper charge limit for the energy-saving preference is, for example, a predetermined amount of charge that prevents degradation of the battery 40 (e.g., from 80% to 90%). Although charging the battery 40 up to the charging upper limit is not necessarily required in order to reach the destination, battery degradation (i.e., battery life) is generally affected by the number of charging sessions. It is therefore preferable to charge the battery up to the charging upper limit, as doing so can reduce the number of charging sessions and thus contributes to energy saving (eco-friendliness).

When the energy-saving preference has been selected, the control unit 20 does not make a battery temperature adjustment request to the ECU 60. This is because adjusting the temperature of the battery 40 consumes electric energy for the temperature adjustment, which does not contribute energy saving.

The control unit 20 then sets a speed limit of the vehicle for traveling to the destination, by using the function of the determination unit 21b (step S12). In this example, since the energy-saving preference has been selected in step S10, the speed limit is set to a predetermined speed that is lower than the legal speed limit. In general, the higher the vehicle speed, the greater the energy consumption. Furthermore, as the running resistance also increases with the vehicle speed, energy consumption increases accordingly. In other words, the lower the vehicle speed, the less energy is consumed. On the other hand, setting the speed limit to a low vehicle speed (e.g., 20 km/h to 30 km/h) in order to prioritize energy saving is not preferable from the standpoint of traffic flow. Therefore, the control unit 20 refers to, for example, the map information 30a to acquire information on the lower speed limit range of each link that constitutes the route, and then sets the speed limit to a value within that acceleration/deceleration range. In the example shown in FIG. 3, since it is assumed that travel is performed on an expressway as described above, the speed limit is set, for example, within the lower speed limit range (e.g., from 50 km/h to 80 km/h).

Subsequently, the control unit 20 refers to the charging facility information 30a1 and determines charging locations (i.e., charging facilities) for the battery 40 during travel to the destination, by using the function of the determination unit 21b (step S13). The processing in step S13 is the same as that in step S5 described above. That is, the control unit 20 performs route search to the destination and extracts charging facilities located along the route obtained by the route search. At this time, the control unit 20 calculates a cruising distance based on the product of the vehicle's average electric power efficiency and the remaining charge of the battery 40, and extracts charging facilities located within the cruising range. The remaining charge of the battery 40 is, for example, 100% at the departure point, and when the battery is charged at a charging facility, it reaches the charging upper limit of 80% to 90% as described in step S11. After setting the charging locations, the control unit 20 proceeds to step S30.

In step S30, the control unit 20 displays the charging plan on the display unit by using the function of the display control unit 21c. That is, the control unit 20 causes the display unit to display the charging upper limit of the battery 40, the speed limit of the vehicle, and the information on the charging locations in accordance with the energy-saving preference selected by the user. This allows the user to grasp the charging upper limit, the vehicle speed limit, and the charging locations for driving with the energy-saving preference. Information such as the time required to reach the destination and the fact that the battery temperature is not to be adjusted may also be displayed on the display unit.

Next, a description is given of the processing to be performed when it is determined in step S10 described above that the balanced preference has been selected by the user (Y in step S10). When the balanced preference is selected, the control unit 20 makes a battery temperature adjustment request by using the function of the determination unit 21b (step S20). This battery temperature adjustment request process is the same as that described above in step S2. That is, the control unit 20 communicates with the ECU 60 and makes a request to control the temperature of the battery 40 within a predetermined temperature range (a temperature range in which the performance of the output and charging efficiency of the battery 40 is considered to be high; for example, from 20°C to 30°C.). After making the battery temperature adjustment request to the ECU 60, the control unit 20 proceeds to step S21.

In step S21, the control unit 20 sets a charging upper limit that indicates the upper limit of the amount of charge to be supplied to the battery for charging during travel to the destination, by using the function of the determination unit 21b. In this example, since the balanced preference has been selected as a driving preference, the charging upper limit for the balanced preference is set. For example, the charging upper limit for the balanced preference is set to an amount that is greater than or equal to the maximum amount of charge that can be supplied with the highest charging efficiency (e.g., 50%) as described above in step S3, and less than the predetermined upper limit charge amount that prevents battery degradation (e.g., from 80% to 90%) as described above in step S11. In the example shown in FIG. 3, the control unit 20 sets the charging upper limit to, for example, 60% to 70%.

The control unit 20 then sets a speed limit of the vehicle for traveling to the destination, by using the function of the determination unit 21b (step S22). In this example, since the balanced preference has been selected, the speed limit is set to a speed that is higher than or equal to the predetermined speed described in step S12 and less than the legal speed limit. In the example shown in FIG. 3, the control unit 20 sets the speed limit to (90 km/h) since the road type is an expressway.

Subsequently, the control unit 20 refers to the charging facility information 30a1 and determines charging locations (i.e., charging facilities) for the battery 40 during travel to the destination, by using the function of the determination unit 21b (step S23). The processing in this step is the same as that in step S5 (and step S13) described above. That is, the control unit 20 performs route search to the destination and extracts charging facilities located along the route obtained by the route search. At this time, the control unit 20 calculates a cruising distance based on the product of the vehicle's average electric power efficiency and the remaining charge of the battery 40, and extracts charging facilities located within the cruising range. The remaining charge of the battery 40 is, for example, 100% at the departure point, and when the battery is charged at a charging facility, it reaches the charging upper limit of 60% to 70% as described in step S21. After setting the charging locations, the control unit 20 proceeds to step S30.

In step S30, the control unit 20 displays the charging plan on the display unit by using the function of the display control unit 21c. That is, the control unit 20 causes the display unit to display the charging upper limit of the battery 40, the speed limit of the vehicle, and the information on the charging locations in accordance with the balanced preference selected by the user. This allows the user to grasp the charging upper limit, the vehicle speed limit, and the charging locations for driving with the balanced preference. Information such as the time required to reach the destination and the fact that the battery temperature is to be adjusted may also be displayed on the display unit.

Next, effects of this embodiment will be described. As described above, in the present embodiment, the control unit 20 determines whether to adjust the temperature of the battery 40, the charging upper limit of the battery 40, and the speed limit of the vehicle in accordance with the user's driving preference, and displays, on the display unit, a charging plan set based on these determined items. This allows the user to grasp information such as the charging locations, the charging upper limit, the speed limit, and whether the battery temperature is to be adjusted in accordance with the driving preference, without having to make a plan by himself or herself on how to adjust factors that affect the remaining charge of the battery 40, such as the charging upper limit. When the user follows the displayed plan, driving in accordance with the driving preference becomes possible.

For example, when the driving preference selected by the user is the time-priority preference, the control unit 20 makes a request to adjust the temperature of the battery 40 to the ECU 60, sets the charging upper limit to the maximum amount of charge that can be supplied with the highest charging efficiency (e.g., 50%), sets the speed limit to the legal speed limit, and displays the resultant plan. That is, the control unit 20 displays a plan that prioritizes shorter arrival time at the destination. This allows the user to grasp information such as the charging upper limit, the charging locations, and the speed limit in accordance with the time-priority preference. When the user follows the displayed plan, driving in accordance with the time-priority preference selected by the user becomes possible.

For example, when the driving preference selected by the user is the energy-saving preference, the control unit 20 does not make a request to adjust the temperature of the battery 40 to the ECU 60, sets the charging upper limit to the upper limit of the amount of charge that prevents degradation of the battery 40 (e.g., from 80% to 90%), sets the speed limit to the predetermined speed lower than the legal speed limit (to 70 km/h in the case of an expressway), and displays the resultant plan. That is, the control unit 20 displays a plan that prioritizes energy saving. This allows the user to grasp information such as the charging upper limit, the charging locations, and the speed limit in accordance with the energy-saving preference. When the user follows the displayed plan, driving in accordance with the energy-saving preference selected by the user becomes possible.

For example, when the driving preference selected by the user is the balanced preference, the control unit 20 makes a request to adjust the temperature of the battery 40 to the ECU 60, sets the charging upper limit to an amount that is greater than or equal to the maximum amount of charge that can be supplied with the highest charging efficiency and less than the upper limit charge amount, sets the speed limit to a speed that is higher than or equal to the predetermined speed described above and less than the legal speed limit, and displays the resultant plan. That is, the control unit 20 displays a plan that balances both the time to reach the destination and the electric energy consumption. This allows the user to grasp information such as the charging upper limit, the charging locations, and the speed limit in accordance with the balanced preference. When the user follows the displayed plan, driving in accordance with the balanced preference selected by the user becomes possible.

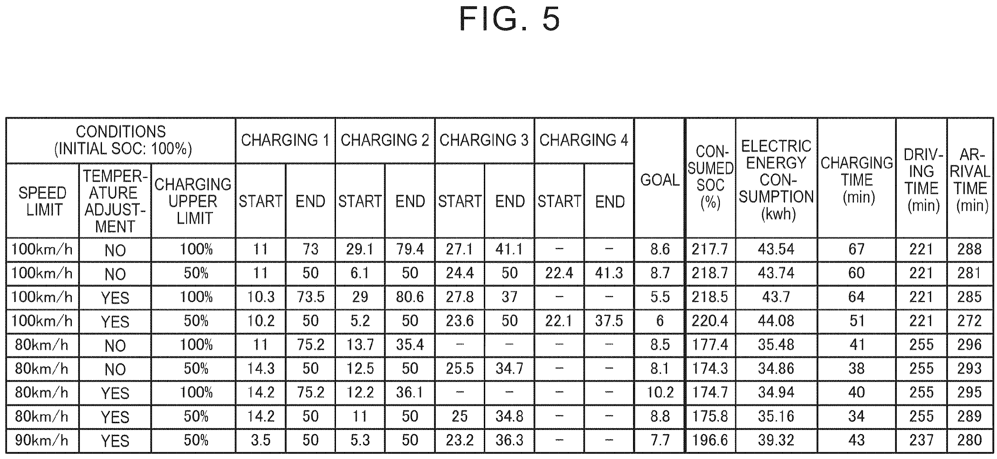

With reference to FIG. 5, a description will now be given of the amount of electric energy consumed to reach the destination, the time required to reach the destination (arrival time), and the like in a case where the speed limit, whether to adjust the battery temperature, and the charging upper limit are made variable. In FIG. 5, "Charging 1" to "Charging 4" each indicate the number of times the battery 40 is charged (for example, Charging 1 represents the first charging session, Charging 2 the second charging session, Charging 3 the third charging session, and Charging 4 the fourth charging session). For each charging session, the remaining charges of the battery 40 at the start and end of charging are shown. "Goal" indicates the remaining charge of the battery 40 upon arrival at the destination. "Consumed SOC" indicates the total amount (%) of SOC (State of Charge) required to reach the destination. "Electric energy consumption" indicates the total amount of electric energy (kWh) required to reach the destination. "Charging time" indicates the total amount of time spent charging the battery 40 before arriving at the destination. "Driving time" indicates the amount of time spent driving to the destination. "Arrival time" indicates the time required to reach the destination (i.e., the sum of the driving time and the charging time). In the example shown in FIG. 5, the maximum charging time for each charging session is set to 30 minutes. Accordingly, even when the charging upper limit is 100%, the remaining charge at the end of the charging session is the level (less than 100%) that can be reached within 30 minutes of charging.

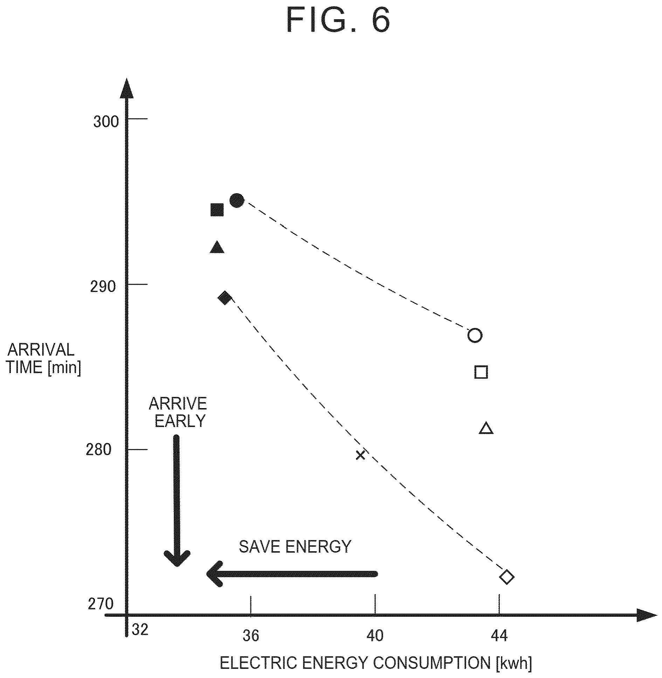

FIG. 6 is a graph in which the arrival time in FIG. 5 is plotted on the vertical axis, and the electric energy consumption in FIG. 5 is plotted on the horizontal axis. Each plot represents the arrival time and the electric energy consumption under the corresponding conditions shown in FIG. 5. For example, the symbol "∘" indicates the arrival time and the electric energy consumption in the case where "the speed limit is 100 km/h, the battery temperature is not adjusted, and the charging upper limit is 100%." The symbol "△" indicates the arrival time and the electric energy consumption in the case where "the speed limit is 100 km/h, the battery temperature is not adjusted, and the charging upper limit is 50%." The symbol "□" indicates the arrival time and the electric energy consumption in the case where "the speed limit is 100 km/h, the battery temperature is adjusted, and the charging upper limit is 100%." The symbol "◇" indicates the arrival time and the electric energy consumption in the case where "the speed limit is 100 km/h, the battery temperature is adjusted, and the charging upper limit is 50% (i.e., the time-priority preference)." The symbol "•" indicates the arrival time and the electric energy consumption in the case where "the speed limit is 80 km/h, the battery temperature is not adjusted, and the charging upper limit is 100% (i.e., the energy-saving preference)." The symbol "▲" indicates the arrival time and the electric energy consumption in the case where "the speed limit is 80 km/h, the battery temperature is not adjusted, and the charging upper limit is 50%." The symbol **"■"** indicates the arrival time and the electric energy consumption in the case where "the speed limit is 80 km/h, the battery temperature is adjusted, and the charging upper limit is 100%." The symbol "◆" indicates the arrival time and the electric energy consumption in the case where "the speed limit is 80 km/h, the battery temperature is adjusted, and the charging upper limit is 50%." The symbol "×" indicates the arrival time and the electric energy consumption in the case where "the speed limit is 90 km/h, the battery temperature is not adjusted, and the charging upper limit is 50% (i.e., the balanced preference)."

Regarding arrival time, it can be seen from FIGS. 5 and 6 that the arrival time becomes shorter when charging is performed with a lower charging upper limit (e.g., 50%). It can also be seen that the arrival time becomes even shorter when the temperature of the battery 40 is adjusted. Regarding electric energy consumption, although there are cases where electric energy consumption is low even when the temperature of the battery 40 is adjusted, the electric energy consumption generally tends to be lower when the temperature of the battery 40 is not adjusted.

### (3) Other Embodiments:

The above embodiment is merely an example for carrying out the present invention, and various other embodiments may also be adopted. The above embodiment illustrates an example in which, when the driving preference selected by the user is the energy-saving preference, the control unit 20 displays, on the display unit, a plan in which the upper charging limit is set to 80% to 90% and the speed limit is set to 70 km/h in the case of an expressway. On the other hand, in the energy-saving preference and the balanced preference described above, the charging upper limit and the speed limit may be set as desired by the user. For example, the control unit 20 may display, on the display unit, the respective predetermined ranges of the charging upper limit and the speed limit in accordance with the selected driving preference (the energy-saving preference or the balanced preference), and allow the user to set or select the charging upper limit and the speed limit from within the respective predetermined ranges. For example, in a case where the energy-saving preference is selected and the user dislikes excessively slow arrival times, the user may set the speed limit to 80 km/h from within a predetermined range (e.g., 50 km/h to 80 km/h). In this manner, by allowing the user to select the speed limit and the like, the user's driving preference can be more accurately reflected.

In the above embodiment, the control unit 20 displays, on the display unit, a charging plan corresponding to a driving preference selected by the user. However, the control unit 20 may display not only the charging plan corresponding to the driving preference selected by the user, but also other plans. For example, when the driving preference selected by the user is the time-priority preference, the control unit 20 may display not only the charging plan for the time-priority preference but also the charging plans for the energy-saving preference and the balanced preference, by using the function of the display control unit 21c.

In the above embodiment, when the time-priority preference is selected, the control unit 20 makes a battery temperature adjustment request in step S2, sets the charging upper limit in step S3, sets the speed limit in step S4, and sets charging locations in S5. However, steps S2 to S5 may be performed in any order. Similarly, steps S11 to S13, and steps S20 to S23, may also be performed in any order.

In the above embodiment, the flowchart illustrates an example in which a charging plan is displayed for travel on an expressway. However, the road for which the charging plan is to be displayed is not limited to expressways; it may be an ordinary road, or a combination of ordinary roads and expressways.

As described above, the target vehicle may be an autonomous vehicle. In the case of an autonomous vehicle, the speed limit described above may be controlled by the ECU 60 in accordance with the user's driving preference. Alternatively, when the charging plan is displayed on the display unit, the user may be allowed to select a speed limit from within a predetermined range in accordance with the user preference, and the ECU 60 may perform control based on the speed limit selected by the user.

Each system or device constituting the above embodiment may be constituted by a larger number of devices that share functions. Such an example includes a case where the system shown in FIG. 1 is configured in combination with one or more other systems. For example, the charging plan display system 10 and a server may together constitute a single system. Alternatively, part of the functions (e.g., at least part of the acquisition unit 21a and the display control unit 21c) of the charging plan display system 10 may be implemented in the charging plan display system 10, and the remaining functions may be implemented in another device (e.g., a server). Other possible configurations include a configuration in which part of the components of the above embodiment is omitted and a configuration in which the processing is changed or omitted.

The user's driving preference acquired by the acquisition unit refers to, for example, a tendency in the behavior of the vehicle when the user drives the vehicle, and may be any tendency in vehicle behavior that affects at least one of the charging location, the charging upper limit, or the speed limit. Accordingly, the driving preference is not limited to the time-priority preference, energy-saving preference, or balanced preference described above. The driving preference may be any combination of two of these preferences, or may be any other preferences. Examples of the other preferences include preferences indicating speed tendencies, acceleration/deceleration intensity tendencies, road selection tendencies, and the like.

The amount of charge determined by the determination unit corresponds to the amount of electric energy supplied to the battery for charging. The charging upper limit is a limit value imposed on the amount of electric energy that can be supplied to the battery for charging, and may be selected from within a range between a minimum value and a maximum value of the amount of electric energy that can be supplied to the battery for charging. The speed limit of the vehicle determined by the determination unit may be any speed selected from within a range between a minimum value and a maximum value of the vehicle speed that can be selected when the vehicle travels on a road.

The charging plan may be any type of information that indicates how the amount of charge to be supplied to the battery for charging should be adjusted in order to travel in accordance with the driving preference. Accordingly, for example, information indicating how the electric energy of the battery should be consumed and how the battery should be charged from the time when the vehicle starts traveling until it reaches the destination may constitute the charging plan. The charging plan may also be information for ensuring that the battery can be charged as planned, and may include various types of information other than the information indicating charging locations as in the above embodiment. For example, information indicating the distance or time to be traveled before the next charging session or the area where the next charging session should occur may be included in the charging plan and displayed. The charging plan may be information that is displayed to the user to encourage the user to drive in accordance with the charging plan, or may alternatively be information for controlling the vehicle to travel in accordance with the charging plan.

Whether the battery temperature is to be adjusted may be set by the user. For example, the control unit 20 may display two buttons: "Adjust temperature" and "Do not adjust temperature." The user can thus set whether the temperature is to be adjusted by selecting one of the buttons.

The technique of the present invention is also applicable as a program or a method. The system, program, and method described above may be implemented as an independent device, or may be implemented using components shared with various parts provided in the vehicle, and are intended to encompass various aspects. Modifications may be made as appropriate. For example, part of the system, program, and method may be implemented in software and part in hardware. The invention can also be implemented as a recording medium for a program for controlling the system. It should be understood that the recording medium for the program may be a magnetic recording medium or a semiconductor memory, or may be any recording medium that will be developed in the future.

### Description of the Reference Numerals

10 ... charging plan display system, 20 ... control unit, 21 ... charging plan display program, 21a . . . acquisition unit, 21b . . . determination unit, 21c . . . display control unit, 30 . . . recording medium, 30a . . . map information, 30a1 . . . charging facility information, 40 . . . battery, 41 . . . GNSS reception unit, 42 . . . vehicle speed sensor, 43 . . . gyro sensor, 44 . . . user I/F unit, 50 . . . motor, 60 . . . ECU

## Claims

1. A charging plan display system comprising:
an acquisition unit configured to acquire a driving preference indicating a driving preference of a user;
a determination unit configured to determine, in accordance with the driving preference, whether to adjust a temperature of a battery configured to supply electric power to a motor that serves as a drive power source for a vehicle, an upper limit of an amount of charge to be supplied to the battery for charging, a speed limit of the vehicle, or a charging facility; and
a display control unit configured to display, on a display unit, a charging plan set based on the determined whether to adjust the temperature of the battery, the upper limit of the amount of charge, the speed limit, or the charging facility.

2. The charging plan display system according to claim 1, wherein:
the driving preference includes a time-priority preference that prioritizes early arrival at a destination;
the acquisition unit is configured to receive a selection of the driving preference including the time-priority preference; and
the determination unit is configured to, when a selection of the time-priority preference is received,
determine to adjust the temperature of the battery,
set an upper limit of the amount of charge to a maximum amount of charge that allows charging with a highest charging efficiency, and
set the speed limit to a legal speed limit.

3. The charging plan display system according to claim 2, wherein the highest charging efficiency is a maximum charging efficiency that does not cause degradation of the battery due to a temperature rise of the battery.

4. The charging plan display system according to claim 1, wherein the determination unit is configured to determine the upper limit of the amount of charge and the speed limit of the vehicle.

5. The charging plan display system according to claim 4, wherein:
the display control unit is further configured to display a predetermined range of the upper limit of the amount of charge and a predetermined range of the speed limit; and
the determination unit is configured to set each of the upper limit of the amount of charge and the speed limit to a value selected by the user from within a corresponding one of the predetermined ranges.

6. The charging plan display system according to claim 1, wherein the display control unit is configured to simultaneously display charging plans for a plurality of the driving preferences.

7. The charging plan display system according to claim 2, wherein:
the driving preference includes an energy-saving preference that prioritizes reducing consumption of the battery during travel to the destination;
the acquisition unit is configured to receive a selection of the driving preference including the energy-saving preference; and
the determination unit is configured to, when a selection of the energy-saving preference is received,
determine not to adjust the temperature of the battery,
set the upper limit of the amount of charge to a predetermined upper limit charge amount that reduces degradation of the battery, and
set the speed limit to a speed lower than a predetermined speed that is lower than the legal speed limit.

8. The charging plan display system according to claim 7, wherein:
the driving preference includes a balanced preference that prioritizes achieving a balance between a time to reach the destination and the consumption of the battery during the travel to the destination;
the acquisition unit is configured to receive a selection of the driving preference including the balanced preference; and
the determination unit is configured to, when a selection of the balanced preference is received,
determine to adjust the temperature of the battery,
set the upper limit of the amount of charge to an amount that is greater than or equal to the maximum amount of charge that allows charging with the highest charging efficiency and less than the upper limit charge amount, and
set the speed limit to a speed that is higher than or equal to the predetermined speed and less than the legal speed limit.

9. A program that causes a computer to function as
an acquisition unit configured to acquire a driving preference indicating a driving preference of a user,
a determination unit configured to determine, in accordance with the driving preference, whether to adjust a temperature of a battery configured to supply electric power to a motor that serves as a drive power source for a vehicle, an upper limit of an amount of charge to be supplied to the battery for charging, a speed limit of the vehicle, or a charging facility, and
a display control unit configured to display, on a display unit, a charging plan set based on the determined whether to adjust the temperature of the battery, the upper limit of the amount of charge, the speed limit, or the charging facility.
